(19) **Europäisches Patentamt / European Patent Office / Office européen des brevets**

(11) **EP 4 528 679 A1**

(12) **EUROPEAN PATENT APPLICATION**
published in accordance with Art. 153(4) EPC

(43) Date of publication:
26.03.2025 Bulletin 2025/13

(21) Application number: 23826290.1

(22) Date of filing: 16.06.2023

(51) International Patent Classification (IPC):
**G06V 20/70** (2022.01)

(52) Cooperative Patent Classification (CPC):
**G06V 10/22; G06V 10/774; G06V 10/94;**
**G06V 20/70**

(86) International application number:
**PCT/CN2023/100703**

(87) International publication number:
**WO 2023/246641 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 24.06.2022 CN 202210727401
19.07.2022 CN 202210851482

(71) Applicant: **Huawei Cloud Computing Technologies Co., Ltd.**
**Guiyang, Guizhou 550025 (CN)**

(72) Inventors:
• **TIAN, Qi**
**Guiyang, Guizhou 550025 (CN)**
• **TANG, Chufeng**
**Guiyang, Guizhou 550025 (CN)**
• **XIE, Lingxi**
**Guiyang, Guizhou 550025 (CN)**
• **ZHANG, Xiaopeng**
**Guiyang, Guizhou 550025 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND APPARATUS FOR IDENTIFYING OBJECT, AND STORAGE MEDIUM**

(57) This application discloses an object recognition method and apparatus, and a storage medium, and belongs to the field of computer vision. The method includes: obtaining to-be-processed visual data and indication information of at least one target object to be recognized; obtaining semantic information based on the indication information of the at least one target object, where the semantic information is semantics used to describe the at least one target object; and recognizing the target object in the visual data based on an object recognition model and the semantic information. In this application, flexibility of object recognition can be improved.

FIG. 7

## Description

This application claims priority to Chinese Patent Application No. 202210727401.1, filed on June 24, 2022 and entitled "METHOD FOR ON-DEMAND VISUAL RECOGNITION", which is incorporated herein by reference in its entirety, and this application further claims priority to Chinese Patent Application No. 202210851482.6, filed on July 19, 2022 and entitled "OBJECT RECOGNITION METHOD AND APPARATUS, AND STORAGE MEDIUM", which is incorporated herein by reference in its entirety.

## TECHNICAL FIELD

This application relates to the field of computer vision, and in particular, to an object recognition method and apparatus, and a storage medium.

## BACKGROUND

Visual data may be data such as an image or a video, and an object in the visual data is obtained by processing the visual data. Then, the object may be used for different applications, for example, positioning based on the object, categorizing the object, or segmenting the object.

An object recognition model needs to be used when the visual data is processed. The object recognition model corresponds to at least one object category, and the object recognition model is used to recognize, from the visual data, an object that belongs to the at least one object category. For example, it is assumed that object categories corresponding to the object recognition model include apple, peach, and banana, and to-be-processed visual data is a picture. If the picture includes an apple, a peach, and a banana, objects recognized from the picture by using the object recognition model include an apple, a peach, and a banana.

Currently, when visual data includes objects of an object category corresponding to an object recognition model, all objects that belong to the object category are recognized from the visual data, and flexibility of object recognition is poor.

## SUMMARY

This application provides an object recognition method and apparatus, and a storage medium, to improve flexibility of object recognition. The technical solutions are as follows.

According to a first aspect, this application provides an object recognition method. In the method, to-be-processed visual data and indication information of at least one target object to be recognized are obtained. Semantic information is obtained based on the indication information of the at least one target object, where the semantic information is semantics used to describe the at least one target object. The target object in the visual data is recognized based on an object recognition model and the semantic information.

Because the semantic information is obtained based on the indication information of the at least one target object, and the semantic information is semantics used to describe the at least one target object, a device can understand semantics of the at least one target object by using the semantic information, so that the target object in the visual data can be recognized based on the object recognition model and the semantic information. The at least one target object to be recognized is an object that needs to be recognized. In this way, an object in the visual data is recognized on demand, and flexibility of object recognition is improved.

In a possible implementation, the indication information of the at least one target object includes textual description information of the at least one target object. A semantic feature corresponding to textual description information of each target object is separately obtained based on a correspondence between the textual description information of the at least one target object and a semantic feature, where the semantic information includes the semantic feature corresponding to the textual description information of each target object.

In this way, the textual description information of each target object is transformed based on the correspondence, to obtain the semantic feature corresponding to the textual description information of each target object. The implementation based on the correspondence is simple, and the semantic feature corresponding to the textual description information of each target object can be quickly obtained through transformation.

In another possible implementation, at least one visual feature vector is obtained based on the object recognition model and the visual data, where the at least one visual feature vector indicates semantic encoding of the visual data. The target object in the visual data is recognized based on the at least one visual feature vector and the semantic information.

Because the at least one visual feature vector indicates the semantic encoding of the visual data, a device can understand the semantic encoding of the visual data by using the at least one visual feature vector, and understand the semantics of the at least one target object by using the semantic information, so that the target object that needs to be recognized can be accurately recognized from the visual data.

In another possible implementation, the indication information of the at least one target object includes indication information of a first object, and the indication information of the first object indicates the first object and at least one component of the first object. The first object in the visual data is recognized based on the object recognition model and the semantic information; and at least one component is recognized from the first object based on the object recognition model and the semantic information. In this way, an object may be first recognized, and then a component of the object is recognized from the object, to implement hierarchical recognition. In addition, recognizing a component from an object reduces an amount of data that is to be processed, and improves efficiency of component recognition.

In another possible implementation, the indication information of the at least one target object further includes location information that indicates a location range of the target object in the visual data. A location feature of the target object is obtained based on the location information, where the location feature indicates a spatial orientation of the target object. The target object in the visual data is recognized based on the object recognition model, the semantic information, and the location feature. The location information may be a location tapped by a user in the visual data. In this way, a contour of a target object at the location tapped by the user is recognized from the visual data, implementing on-demand recognition and improving flexibility of recognition.

In another possible implementation, the visual data includes an image or a video, and the at least one visual feature vector includes a visual feature vector of each pixel in the visual data. A score between a first pixel and each target object to be recognized is separately obtained based on a visual feature vector of the first pixel and the semantic information, where the visual data includes the first pixel, and the score between the first pixel and the target object to be recognized is used to reflect a probability that the first pixel belongs to the target object to be recognized. A target object whose score with the first pixel meets a specified condition is selected from all target objects to be recognized, where the first pixel is a pixel in the selected target object.

The score between the first pixel and each target object to be recognized is separately obtained based on the visual feature vector of the first pixel and the semantic information. In this way, an object to which the first pixel belongs can be accurately recognized based on the score, improving object recognition precision.

In another possible implementation, the object recognition model is obtained through model training based on at least one training sample and semantic information corresponding to indication information of at least one object to be annotated, the training sample includes the at least one object indicated by the indication information, and a part or all of the at least one object is annotated. In this way, the at least one object to be annotated is an object that needs to be annotated, implementing on-demand object annotation. In addition, a part or all of the at least one object is annotated, improving flexibility of object annotation.

In another possible implementation, the annotated object includes a second object, image definition of the second object exceeds a definition threshold, and a component of the second object is annotated. In other words, a component of only an object whose image definition exceeds the definition threshold is annotated, to avoid an annotation error.

In another possible implementation, textual description information that can be transformed based on the correspondence between the textual description information and the semantic feature is more than textual description information of the at least one object to be annotated. For example, the textual description information that can be transformed based on the correspondence between the textual description information and the semantic feature includes first textual description information, and the textual description information of the at least one object to be annotated does not include the first textual description information. In other words, an object indicated by the first textual description information may be recognized based on the correspondence and the object recognition model, and an object beyond an object category corresponding to the object recognition model can be recognized.

In another possible implementation, the visual data includes an annotated object, and object recognition precision of the object recognition model is obtained based on the annotated object and the target object. In this way, object recognition performed by the object recognition model may be evaluated based on the precision.

According to a second aspect, this application provides an object recognition apparatus, configured to perform the method according to the first aspect or any possible implementation of the first aspect. Specifically, the apparatus includes units configured to perform the method according to the first aspect or any possible implementation of the first aspect.

According to a third aspect, this application provides an object recognition device, including a processor and a memory. The processor is configured to execute instructions stored in the memory, so that the device performs the method according to the first aspect or any possible implementation of the first aspect.

According to a fourth aspect, this application provides a computer program product including instructions. When the instructions are run by a device, the device is caused to perform the method according to the first aspect or any possible implementation of the first aspect.

According to a fifth aspect, this application provides a computer-readable storage medium, configured to store a computer program. When the computer program is executed by a device, the device performs the method according to the first aspect or any possible implementation of the first aspect.

According to a sixth aspect, this application provides a chip. The chip includes a memory and a processor. The memory is configured to store computer instructions, and the processor is configured to invoke the computer instructions from the memory and run the computer instructions, to perform the method according to the first aspect or any possible implementation of the first aspect.

BRIEF DESCRIPTION OF DRAWINGS

FIG. 1 is a diagram of a network architecture according to an embodiment of this application;
FIG. 2 is a diagram of visual data according to an embodiment of this application;
FIG. 3 is a diagram of a training sample according to an embodiment of this application;
FIG. 4 is a diagram of another training sample according to an embodiment of this application;
FIG. 5 is a diagram of a knowledge base according to an embodiment of this application;
FIG. 6 is a flowchart of a model training method according to an embodiment of this application;
FIG. 7 is a flowchart of an object recognition method according to an embodiment of this application;
FIG. 8 is a diagram of tapping an object by a user according to an embodiment of this application;
FIG. 9 is a diagram of a structure of an object recognition apparatus according to an embodiment of this application;
FIG. 10 is a diagram of a structure of an object recognition device according to an embodiment of this application;
FIG. 11 is a diagram of a structure of an object recognition cluster according to an embodiment of this application; and
FIG. 12 is a diagram of a structure of another object recognition cluster according to an embodiment of this application.

**DESCRIPTION OF EMBODIMENTS**

The following further describes in detail embodiments of this application with reference to accompanying drawings.

Visual recognition (visual recognition) technology is a technology that uses a computer to predict and analyze various important information in visual data. It is core research in the field of computer vision. Over recent years, thanks to rapid development of theories and technologies such as deep learning and convolutional neural network, the visual recognition technology has been widely used in various aspects of production and life. For example, emerging industries such as smart city, smart healthcare, and autonomous driving cannot work without the visual recognition technology.

The visual recognition technology uses an object recognition model, which is an intelligent model for object recognition. In this way, the visual recognition technology can recognize a target object from to-be-processed visual data based on the object recognition model. The target object may be used to implement different tasks. Optionally, the visual data includes data such as an image and/or a video.

In some embodiments, the target object is used to implement various tasks such as object categorization, object positioning, and/or object segmentation. For example, an object segmentation task is used as an example for description. An objective of the object segmentation task is to recognize, from an image, several target objects (which may also be referred to as target regions) having specific features, and segment the recognized target objects from the image. In other words, the object segmentation task is used to divide an image into several target regions with specific features. According to different manners of target object defining, the object segmentation task may be further divided into different object segmentation tasks, for example, may be further divided into semantic segmentation (semantic segmentation), instance segmentation (instance segmentation), and/or part segmentation (part segmentation).

Semantic segmentation is to categorize each pixel in an image into a corresponding semantic concept. Instance segmentation is to divide an image into regions corresponding to some specific instances. Part segmentation is to further divide some instances into regions corresponding to different parts. A target region corresponding to semantic segmentation is a semantic concept. The semantic concept may be an object category (for example, road, vehicle, or building). A target region corresponding to instance segmentation is an object (for example, a specific vehicle or a specific building). A target region corresponding to part segmentation is an object component (for example, a door, a body, or a wheel of a vehicle). The image segmentation task is described above, and other tasks of visual recognition are not described one by one.

The visual recognition technology includes components such as an annotation process, a recognition process, and an evaluation process. In the annotation process, an object in visual data is annotated to obtain a training sample. After the training sample is obtained, model training is performed by using the annotated training sample, to obtain an object recognition model. The annotation process provides a data basis for the visual recognition technology. In the recognition process, a target object is recognized from to-be-processed visual data based on the object recognition model, and the recognition process is a specific execution or running process. In the evaluation process, a score and feedback are provided for the recognition result, and the evaluation process is used to obtain object recognition precision.

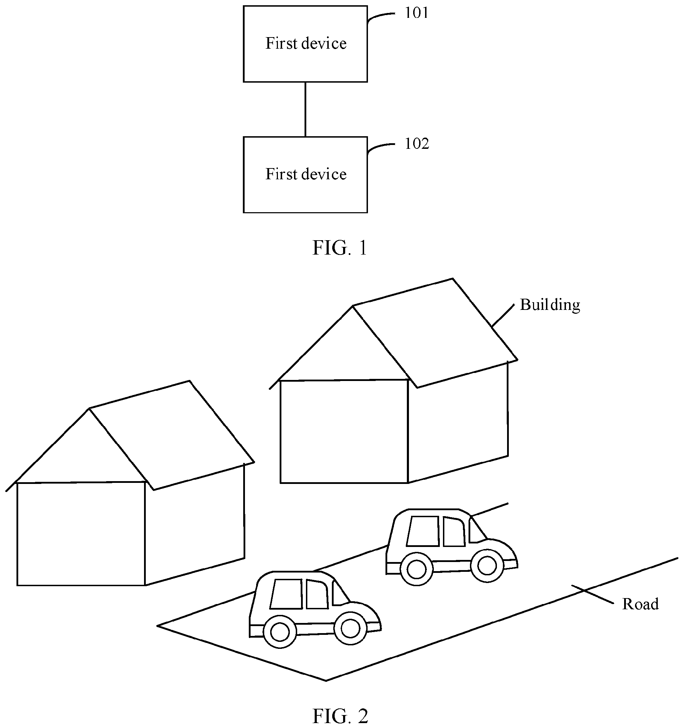

Refer to FIG. 1. An embodiment of this application provides a network architecture 100. The network architecture 100 includes a first device 101 and a second device 102. The first device 101 communicates with the second device 102. Optionally, the network architecture 100 includes one or more second devices 102, and the first device 101 communicates with each second device 102.

For an annotation process included in a visual recognition technology, the first device 101 may be configured to perform the annotation process. The first device 101 is configured to assist an annotator in annotating an object in visual data to obtain a training sample, and perform model training by using the training sample, to obtain an object recognition model.

Because the first device 101 communicates with each second device 102, the first device 101 may deploy the object recognition model on each second device 102.

For a recognition process and an evaluation process included in the visual recognition technology, the second device 102 is configured to perform the recognition process and/or the evaluation process based on the object recognition model. The second device 102 is configured to obtain to-be-processed visual data, recognize a target object from the to-be-processed visual data based on the object recognition model, and/or score and feed back the recognized target object.

For example, the first device 101 is a computer, and each second device 102 is a camera. The camera may be deployed on a road and the like. After the computer obtains an object recognition model through training, the object recognition model is deployed on the camera. The camera captures to-be-processed visual data, and a target object in the to-be-processed visual data is recognized based on the object recognition model.

In some embodiments, for the foregoing annotation process, the first device 101 displays visual data to be annotated, and an annotator annotates an object in the visual data, to obtain a training sample. During implementation, the first device 101 obtains at least one piece of visual data. For any piece of visual data, the visual data includes at least one object, and the visual data is displayed. Then, the annotator annotates the at least one object in the visual data, and the first device 101 uses the annotated visual data as a training sample. Annotating an object in visual data refers to filling the object with one or more colors.

Currently, when an object in visual data is annotated, all objects in the visual data are usually annotated, and the annotation workload is heavy. Refer to FIG. 2 for an example. The picture includes vehicles, buildings, and a road, the annotator annotates each object in the picture, that is, annotates the vehicles, the buildings, and the road in the picture. Then, the first device 101 uses the picture as a training sample, and all objects in the training sample are annotated.

Because all objects in the training sample are annotated, the first device 101 performs model training based on the training sample to obtain an object recognition model. The object recognition model corresponds to textual description information of each object, and the object recognition model can recognize a large quantity of objects. In this way, when recognizing an object in to-be-processed visual data by using the object recognition model, the second device 102 usually recognizes all objects in the to-be-processed visual data. The recognized objects may include an object that the user does not expect to recognize, causing low flexibility of object recognition, and wasting a large quantity of computing resources.

To reduce the annotation workload, an object is annotated on demand in embodiments of this application; and/or to improve flexibility of object recognition and avoid a waste of computing resources, an object is recognized on demand in embodiments of this application.

Embodiments of this application define indication information of at least one object that needs to be annotated. The first device 101 obtains at least one piece of visual data. For any piece of visual data, the visual data includes the at least one object indicated by the indication information, and the at least one object is an object to be annotated. The annotator annotates a part or all of the at least one object, and the first device 101 uses the annotated visual data as a training sample. That is, the training sample includes the at least one object indicated by the indication information, and a part or all of the at least one object is annotated. In this way, an object is annotated on demand.

In some embodiments, the indication information includes textual description information of each of the at least one object. Textual description information of an object is used to describe the object. Optionally, the textual description information of the object includes an object category and the like of the object. It is assumed that the object is a vehicle, and the textual description information of the object is "vehicle".

In some embodiments, the annotator further inputs textual description information of each annotated object to the first device 101, and the first device 101 associates the training sample with the textual description information of each annotated object. Optionally, for the association operation, the first device 101 labels an annotated object in the training sample with textual description information corresponding to the annotated object. Therefore, the training sample includes the textual description information corresponding to the annotated object.

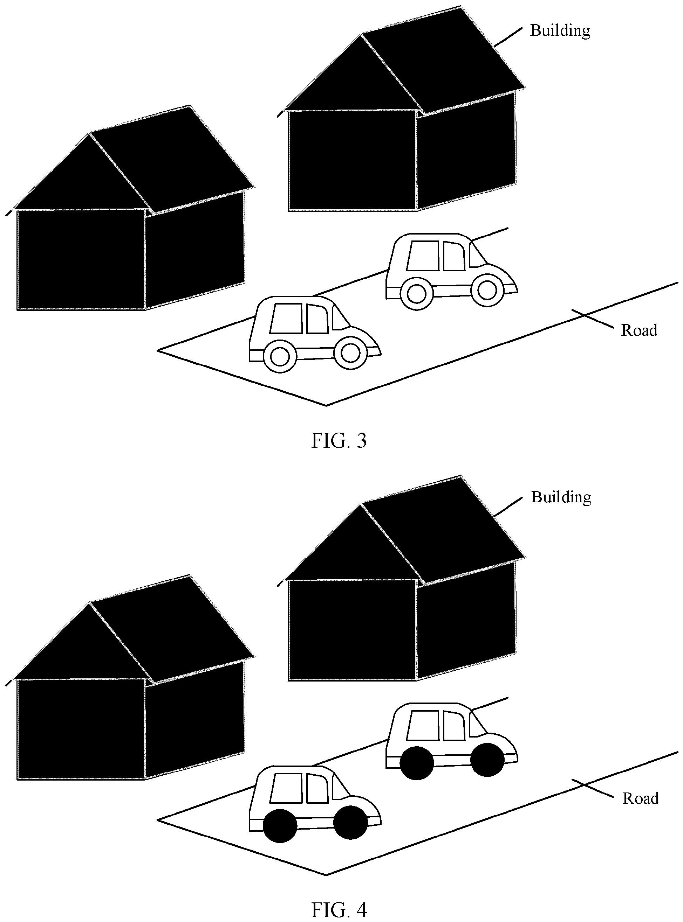

For example, it is assumed that the at least one object that needs to be annotated includes a building. For the visual data shown in FIG. 2, the visual data includes buildings, vehicles, and a road, and the annotator fills the buildings in the visual data shown in FIG. 2 with black, to annotate the buildings in the visual data. Refer to FIG. 3. The first device 101 uses the annotated visual data as a training sample.

In some embodiments, for any annotated object in the training sample, if image definition of the object exceeds a definition threshold, the annotator may further continue to annotate a component included in the object. That is, for an annotated object whose image definition in the training sample exceeds the definition threshold, a component of the object is also annotated. Optionally, all components of the object may be annotated, or some components of the object are annotated. Optionally, when the image definition of the object does not exceed the definition threshold, a component included in the object is not annotated, but the object may be annotated, avoiding erroneous annotation when a component of the object is annotated.

In some embodiments, the annotator further inputs textual description information of an annotated component in the object to the first device 101. Optionally, the first device 101 labels, in the training sample, the textual description information of the annotated component in the object. Therefore, the training sample includes the textual description information of the annotated component in the object. Optionally, the textual description information of the component is used to describe the component. For example, the textual description information of the component may include a name of the component, and the like.

For example, components of a vehicle include a door, a wheel, a body, and the like. For a vehicle image whose image definition in the visual data shown in FIG. 2 exceeds the definition threshold, it is assumed that a wheel of the vehicle needs to be annotated. Refer to FIG. 4, it is assumed that the annotator fills the wheel with black.

In some embodiments, for any component included in the object, the component includes at least one sub-component, and the at least one sub-component included in the component may be further annotated. For example, for the wheel of the vehicle, the wheel includes a tire and a hub, and the tire and the hub of the wheel may be further annotated.

In some embodiments, after obtaining at least one training sample, the first device 101 further establishes a knowledge base based on the at least one training sample. The knowledge base may be a graph, and includes multiple nodes. For a node in the knowledge base, the node represents textual description information of an annotated object, and all child nodes of the node represent different components of the object. Optionally, the node stores textual description information of an object represented by the node, and a child node stores textual description information of a component represented by the child node. Alternatively, the node represents a component of an object, and all child nodes of the node represent different sub-components of the component. Optionally, the node stores textual description information of a component represented by the node, and a child node stores textual description information of a sub-component represented by the child node.

In some embodiments, an operation of establishing the knowledge base is as follows: For any training sample, obtain textual description information of an annotated object from the training sample, and establish, in the knowledge base, a node used to store the textual description information; and obtain textual description information of a component in the annotated object from the training sample, and establish, in the knowledge base, a child node of the node, where the child node is used to store the textual description information of the component. Components included in an object of any object category may be clearly obtained by using the knowledge base.

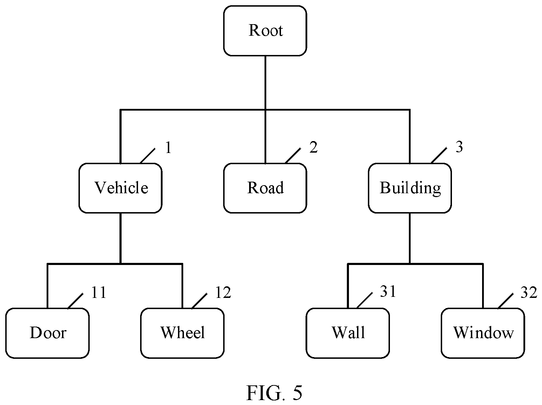

In some embodiments, in the knowledge base, nodes corresponding to all objects have a same parent node, and the parent node is a virtual node and is a root node of the knowledge base. For example, for the training sample shown in FIG. 4, a knowledge base shown in FIG. 5 is established based on the training sample. The knowledge base includes a node 1 corresponding to a vehicle, a node 2 corresponding to a road, a node 3 corresponding to a building, and the like. Parent nodes of the node 1, the node 2, and the node 3 are all a virtual node "Root". Child nodes of the node 1 include a child node 11 corresponding to a door and a child node 12 corresponding to a wheel. Meanings of child nodes of another node are not enumerated.

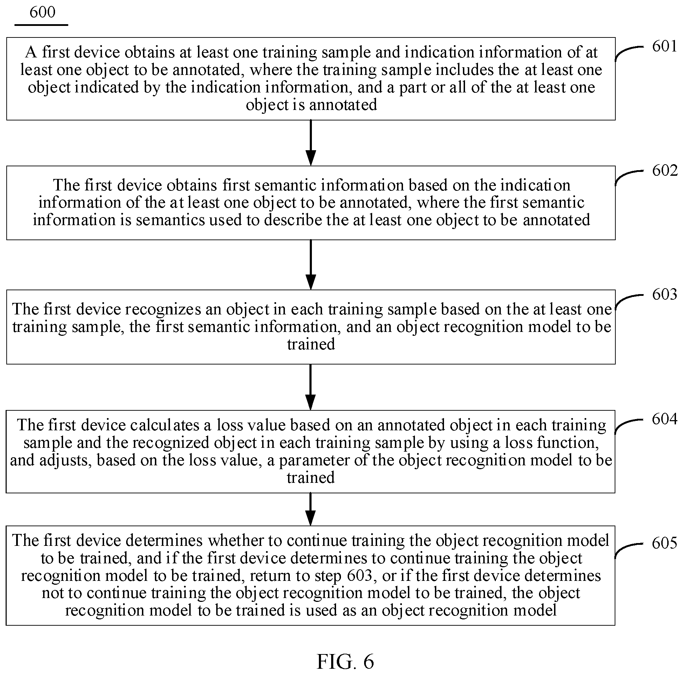

Refer to FIG. 6. An embodiment of this application provides a model training method 600. The method 600 is applied to the network architecture 100 shown in FIG. 1, and the method 600 is performed by the first device 101 in the network architecture 100. Refer to FIG. 6. The model training method 600 includes a procedure including the following steps 601 to 605.

Step 601: A first device obtains at least one training sample and indication information of at least one object to be annotated, where the training sample includes the at least one object indicated by the indication information, and a part or all of the at least one object is annotated.

The at least one object to be annotated is an object that needs to be annotated. The first device may store indication information of the object that needs to be annotated. The indication information is used to guide an annotator to annotate an object in visual data, to obtain a training sample.

The indication information includes textual description information of the at least one object. That is, the indication information includes textual description information of each of the at least one object, and textual description information of an object is used to describe the object. For example, the textual description information of the object includes an object category of the object, and the object may be described by using the object category.

In step 601, the first device obtains at least one piece of visual data, and for any piece of visual data in the visual data, the visual data includes at least one object to be annotated indicated by the indication information, and the visual data is displayed. The annotator annotates a part or all of the at least one object in the displayed visual data. The first device then uses the visual data as a training sample. The first device may display all of the at least one piece of visual data one by one. The annotator annotates a part or all of at least one object to be annotated in each piece of visual data. The first device uses each piece of annotated visual data as a training sample.

Step 602: The first device obtains first semantic information based on the indication information of the at least one object to be annotated, where the first semantic information is semantics used to describe the at least one object to be annotated.

In some embodiments, the indication information includes textual description information of each object, and the first semantic information includes a semantic feature corresponding to the textual description information of each object. A semantic feature corresponding to textual description information of an object is used to describe semantics of the object. Optionally, the semantic feature of the object is a feature vector.

In step 602, the semantic feature corresponding to the textual description information of each object is separately obtained based on a correspondence between textual description information and a semantic feature.

In some embodiments, the correspondence between textual description information and a semantic feature may be a correspondence table, and each entry in the correspondence table includes textual description information of an object and a semantic feature corresponding to the textual description information. In this way, in step 602, the semantic feature corresponding to the textual description information of each object is queried from the correspondence table based on the textual description information of each object.

In some embodiments, the correspondence between textual description information and a semantic feature may be a textual description information transformation model. The textual description information transformation model is used to obtain, based on textual description information to be transformed, a semantic feature corresponding to the textual description information. For example, the textual description information transformation model is a text encoder. In this way, in step 602, the textual description information of each object is input into the textual description information transformation model, so that the textual description information transformation model transforms the textual description information of each object to separately obtain a semantic feature corresponding to the textual description information of each object, and the semantic feature corresponding to the textual description information of each object output by the textual description information transformation model is obtained.

In some embodiments, the textual description information transformation model is obtained by training an intelligent model. A skilled person creates multiple first samples, where each first sample includes textual description information of an object and a semantic feature corresponding to the textual description information, and trains the intelligent model by using the multiple first samples, to obtain the textual description information transformation model.

**In** some embodiments, the at least one object includes a first object, and textual description information of the first object indicates the first object and at least one component of the first object. Therefore, a semantic feature of the textual description information of the first object includes a semantic feature of the first object and a semantic feature of each of the at least one component.

Then, the first device performs model training based on the at least one training sample and the first semantic information. For a detailed implementation process, refer to the following steps 603 to 605.

Step 603: The first device recognizes an object in each training sample based on the at least one training sample, the first semantic information, and an object recognition model to be trained.

The object recognition model to be trained has a visual feature extraction function, and includes a convolutional neural network, a vision transformer model (vision transformer, ViT), or any network having a visual feature extraction function. Optionally, the network having a visual feature extraction function includes a deep residual network (deep residual network, ResNet) and the like.

Step 603 may be implemented through the following operations 6031 to 6032.

6031: For any one of the at least one training sample, the first device obtains at least one visual feature vector based on the object recognition model to be trained and the training sample, where the at least one visual feature vector indicates semantic encoding of the training sample.

The training sample includes, for example, a picture and/or a video. The training sample includes multiple pixels, and the semantic encoding of the training sample include semantic encoding of each pixel in the training sample. The at least one visual feature vector includes a visual feature vector of each pixel in the training sample, and the visual feature vector of the pixel includes at least one visual feature that indicates the semantic encoding of the pixel.

**In** 6031, the first device inputs the training sample into the object recognition model to be trained, so that the object recognition model to be trained processes the training sample to obtain a visual feature vector of each pixel in the training sample, and the visual feature vector of each pixel output by the object recognition model to be trained is obtained.

6032: The first device recognizes an object in the training sample based on the at least one visual feature vector and the first semantic information.

For the at least one object to be annotated, the first semantic information includes a semantic feature corresponding to textual description information of each object to be annotated.

In some embodiments, the training sample includes an image or a video, and the at least one visual feature vector includes a visual feature vector of each pixel in the training sample. In 6032, the object in the training sample may be recognized through the following operations (1) to (2).

(1): Separately obtain, based on a visual feature vector of a first pixel and the semantic feature corresponding to the textual description information of each object to be annotated, a score between the first pixel and each object to be annotated.

The training sample includes the first pixel, and the score between the first pixel and the object to be annotated is used to reflect a probability that the first pixel belongs to the object to be annotated.

The semantic feature corresponding to the textual description information of any object to be annotated is also a vector, and the score between the first pixel and the object to be annotated is obtained based on the visual feature vector of the first pixel and the semantic feature corresponding to the textual description information of the object to be annotated according to the following Formula 1.

$$\text{Formula 1 is:} \quad u = E^T \bullet f_{(w,h)}.$$

In Formula 1, u is the score between the first pixel and the object to be annotated, E is a vector, the vector includes the semantic feature corresponding to the textual description information of the object to be annotated, $E^T$ is a transposed vector of the vector, $f_{(w,h)}$ is the first pixel, and (w,h) is coordinates of the first pixel in the visual data.

In operation (1), the score between the first pixel and each object to be annotated is calculated according to the foregoing Formula 1.

(2): Select, from all objects to be annotated, an object whose score with the first pixel meets a specified condition, where the first pixel is a pixel in the selected object.

In some embodiments, the specified condition refers to selecting any object whose score with the first pixel is greater than a score threshold, or the specified condition refers to selecting an object whose score with the first pixel is greater than a score threshold and whose score with the first pixel is the largest.

That is, in operation (2), any object whose score with the first pixel is greater than the score threshold is selected from all the objects to be annotated. Alternatively, all objects whose scores with the first pixel are greater than a score threshold are selected from all objects to be annotated, and an object whose score with the first pixel is the largest is selected from all the objects. The first pixel is used as a pixel of the selected object.

All pixels that belong to the object may be obtained from the training sample by repeating the foregoing operations (1) to (2), to recognize the object in the training sample.

In some embodiments, when the recognized object is the first object, after the first object is recognized, at least one component is further recognized from the first object based on an object recognition model and a semantic feature corresponding to textual description information of the first object.

During implementation, the semantic feature corresponding to the textual description information of the first object includes a semantic feature of each of the at least one component, and a score between a second pixel and each component is obtained based on a visual feature vector of the second pixel and a semantic feature of each component according to Formula 1. The first object includes the second pixel, and the score between the second pixel and any component is used to reflect a probability that the second pixel belongs to the component. A component whose score with the second pixel meets a specified condition is selected from all components, where the second pixel is a pixel in the selected component. The foregoing process is repeated, and all pixels belonging to the selected component may be recognized from the first object, to recognize the selected component from the first object.

For any component of the first object, the component includes at least one sub-component, and the at least one sub-component may be recognized from the component in the foregoing manner. Details are not described herein again.

Step 604: The first device calculates a loss value based on an annotated object in each training sample and the recognized object in each training sample by using a loss function, and adjusts, based on the loss value, a parameter of the object recognition model to be trained.

Step 605: The first device determines whether to continue training the object recognition model to be trained, and if the first device determines to continue training the object recognition model to be trained, return to step 603, or if the first device determines not to continue training the object recognition model to be trained, the object recognition model to be trained is used as the object recognition model.

In some embodiments, when the object recognition model is trained for a specified quantity of times, it is determined not to continue training the object recognition model to be trained.

Alternatively, object recognition precision of the object recognition model to be trained is obtained by using multiple verification samples. When the precision exceeds a specified threshold, it is determined not to continue training the object recognition model to be trained.

During implementation, multiple verification samples are obtained, where each verification sample includes an annotated object. An object in each verification sample is recognized based on the object recognition model to be trained and a semantic feature corresponding to textual description information of the annotated object. Object recognition precision is calculated based on the annotated object in each verification sample and the recognized object in each verification sample. When the precision does not exceed the specified threshold, it is determined to continue training the object recognition model to be trained. When the precision exceeds the specified threshold, it is determined not to continue training the object recognition model to be trained.

After obtaining the object recognition model through training, the first device may send the object recognition model to a second device. After receiving the object recognition model, the second device obtains to-be-processed visual data, and recognizes a target object in the to-be-processed visual data based on the object recognition model.

In this embodiment of this application, requirement information is defined. The requirement information indicates at least one object that needs to be recognized, and the at least one object is an object to be recognized. The second device recognizes a target object in to-be-processed visual data based on the requirement information and the object recognition model. The target object is an object indicated by the requirement information. In this way, an object is recognized on demand. For a detailed implementation process of on-demand object recognition, refer to any one of the following embodiments.

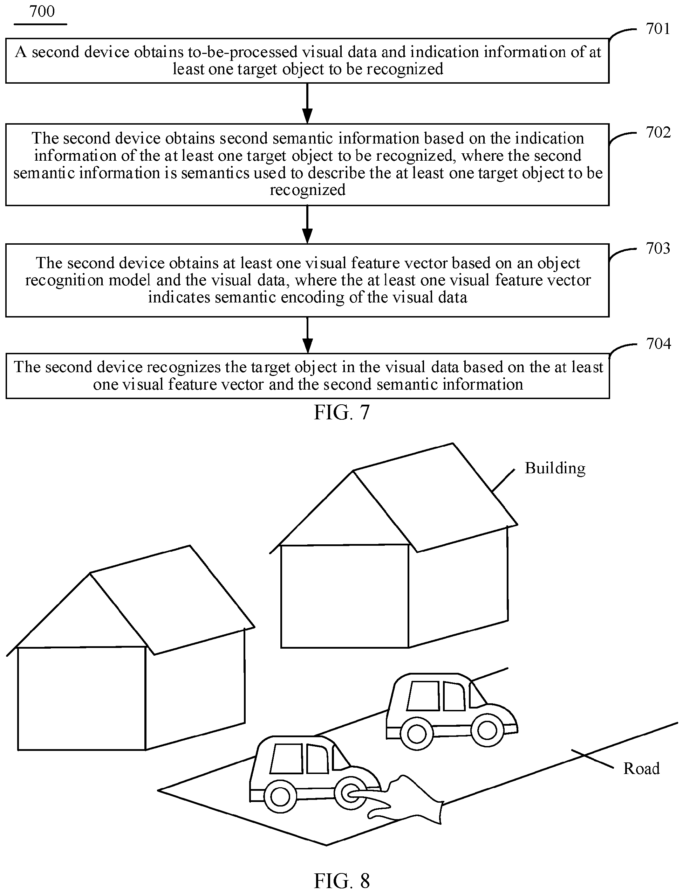

Refer to FIG. 7. An embodiment of this application provides an object recognition method 700. The method 700 is applied to the network architecture 100 shown in FIG. 1. The method 700 is performed by the second device 102 in the network architecture 100. The second device 102 includes an object recognition model. The object recognition model may be an object recognition model trained by using the method 600 shown in FIG. 6. The method 700 includes the following procedure including step 701 to step 704.

Step 701: A second device obtains to-be-processed visual data and indication information of at least one target object to be recognized.

The requirement information includes the indication information of at least one target object to be recognized, and the indication information includes textual description information of each target object to be recognized. The at least one target object to be recognized is an object that needs to be recognized as indicated by the requirement information.

In some embodiments, the to-be-processed visual data includes, for example, a picture and/or a video. Optionally, the second device may store visual data of at least one object that needs to be recognized, and may select one piece of visual data from the at least one piece of visual data as the to-be-processed visual data. Alternatively, the second device is a device such as a camera, and the second device obtains the to-be-processed visual data through photographing. Certainly, the second device may further obtain the to-be-processed visual data in another manner, which is not enumerated herein.

In some embodiments, the at least one target object to be recognized includes a second object, and the indication information indicates the second object and at least one component of the second object that need to be recognized.

During implementation, the indication information includes textual description information of the second object, where the textual description information indicates the second object and the at least one component of the second object. For example, the textual description information of the second object includes an object category of the second object and a name of the at least one component of the second object, so that the textual description information of the second object indicates the second object and the at least one component of the second object that need to be recognized.

In some embodiments, the second device locally stores the indication information of the at least one target object to be recognized. In step 701, the second device obtains the locally stored indication information of the at least one target object to be recognized. Alternatively, in step 701, a user inputs the indication information of the at least one target object to be recognized to the second device, and the second device receives the indication information of the at least one target object to be recognized. Alternatively, in step 701, a user inputs the indication information of the at least one target object to be recognized to the first device, the first device sends the indication information of the at least one target object to be recognized to the second device, and the second device receives the indication information of the at least one target object to be recognized. Certainly, the second device may further obtain the indication information of the at least one target object to be recognized in another manner, which is not enumerated herein.

In some embodiments, for the indication information of the at least one target object to be recognized input by the user, the indication information includes textual description information of each target object to be recognized, and the user may determine the textual description information of each target object to be recognized with reference to a knowledge base. Optionally, for any target object to be recognized, the target object may be an object or a component of an object, and the textual description information of the target object includes an object category of the target object, a name of a component of the target object, and/or the like.

For example, with reference to the knowledge base shown in FIG. 5, the user selects to recognize a building and a vehicle, and selects to recognize a wheel and a door. The user inputs textual description information 1 and textual description information 2 to the second device, where the textual description information 1 includes an object category "building", and the textual description information 2 includes an object category "vehicle" and names of components "wheel" and "door". Alternatively, the user selects to recognize a door, and the user inputs textual description information 3 to the second device, where the textual description information 3 includes a name of a component "door".

In some embodiments, the indication information of the at least one target object to be recognized further includes location information that indicates a location range of the target object in the visual data. Optionally, when inputting textual description information of a target object, the user further inputs location information that indicates a location range of the target object in the visual data. The location information indicates that the user needs to recognize a target object in the visual data at a location indicated by the location information.

For example, it is assumed that the to-be-processed visual data is the street view picture shown in FIG. 2, and it is assumed that the textual description information of the target object input by the user includes an object category "car". Refer to FIG. 8. After the street view picture is displayed, the user may tap an image of car in the street view picture. The second device obtains a tapped location, where the location is two-dimensional coordinates. The location is used as the location information that indicates the location range of the target object in the visual data.

Then, the target object in the to-be-processed visual data may be recognized based on an object recognition model and the indication information, to implement on-demand object recognition. For a detailed implementation process, refer to the following steps 702 to 704.

Step 702: The second device obtains second semantic information based on the indication information of the at least one target object to be recognized, where the second semantic information is semantics used to describe the at least one target object to be recognized.

The second semantic information includes a semantic feature corresponding to textual description information of each target object to be recognized, and the semantic feature corresponding to the textual description information of each target object is used to reflect semantics of each target object.

In step 702, a semantic feature corresponding to textual description information of each target object to be recognized is separately obtained based on a correspondence between a textual description information and a semantic feature and the textual description information of each target object to be recognized.

For a semantic feature corresponding to textual description information of any target object, the semantic feature may be a vector, and the semantic feature is semantics of describing the target object in a mathematical manner.

In some embodiments, the correspondence between textual description information and a semantic feature may be a correspondence table, and each entry in the correspondence table includes one piece of textual description information and a semantic feature corresponding to the textual description information. In this way, in step 702, a semantic feature corresponding to textual description information of each target object to be recognized is queried from the correspondence table based on the textual description information of each target object to be recognized.

In some embodiments, the correspondence between textual description information and a semantic feature may be a textual description information transformation model. In this way, in step 702, the textual description information of each target object to be recognized is input into the textual description information transformation model, so that the textual description information transformation model transforms the textual description information of each target object to be recognized to separately obtain a semantic feature corresponding to the textual description information of each target object to be recognized, and the semantic feature corresponding to the textual description information of each target object to be recognized output by the textual description information transformation model is obtained.

In some embodiments, the indication information includes the textual description information of the second object, where the textual description information of the second object indicates the second object and the at least one component of the second object that need to be recognized. Therefore, a semantic feature corresponding to the textual description information of the second object includes a semantic feature used to describe the second object and a semantic feature used to describe each of the at least one component.

In some embodiments, the indication information further includes location information that indicates a location range of a target object in the visual data. In step 702, a location feature of the target object may be further obtained based on the location information of the target object, and the location feature indicates a spatial orientation of the target object.

In some embodiments, the location feature of the target object may be a vector, and the location feature describes the spatial orientation of the target object in a mathematical manner.

In some embodiments, the location information of the target object is input into a location transformation model, so that the location transformation model obtains the location feature of the target object based on the location of the target object, and the location feature of the target object output by the location transformation model is obtained.

In some embodiments, the location transformation model is obtained by training an intelligent model. A skilled person creates multiple second samples, where each second sample includes location information of one object and a location feature corresponding to the location information, and trains the intelligent model by using the multiple second samples, to obtain the location transformation model. Optionally, the location transformation model is a coordinate encoder or the like.

Step 703: The second device obtains at least one visual feature vector based on the object recognition model and the visual data, where the at least one visual feature vector indicates semantic encoding of the visual data.

The visual data includes, for example, a picture and/or a video. The visual data includes multiple pixels, and the semantic encoding of the visual data includes semantic encoding of each pixel in the visual data. The at least one visual feature vector includes a visual feature vector of each pixel in the visual data, and the visual feature vector of a pixel includes at least one visual feature that indicates semantic encoding of the pixel.

In step 703, the second device inputs the visual data into the object recognition model, so that the object recognition model processes the visual data to obtain a visual feature vector of each pixel in the visual data, and the visual feature vector of each pixel output by the object recognition model is obtained.

Step 704: The second device recognizes the target object in the visual data based on the at least one visual feature vector and the second semantic information.

In some embodiments, when the location feature of the target object is obtained, the target object in the visual data can be further recognized based on the at least one visual feature vector, the second semantic information, and the location feature. Therefore, the target object at the location tapped by the user is recognized from the visual data, that is, a contour of the target object at the location is recognized, implementing on-demand recognition and improving flexibility of recognition.

In some embodiments, the visual data includes an image or a video, and the at least one visual feature vector includes a visual feature vector of each pixel in the visual data. In step 704, the target object in the visual data may be recognized through the following operations 7041 to 7042.

7041: The second device separately obtains, based on a visual feature vector of a third pixel and the second semantic information, a score between the third pixel and each target object to be recognized.

The visual data includes the third pixel, and the score between the third pixel and the target object to be recognized is used to reflect a probability that the third pixel belongs to the target object to be recognized.

For each target object to be recognized, the second semantic information includes a semantic feature corresponding to textual description information of each target object to be recognized. In 7041, the score between the third pixel and the target object to be recognized is obtained based on the visual feature vector of the third pixel and the semantic feature corresponding to the textual description information of any target object to be recognized according to the following Formula 2.

Formula 2 is:  $U = E^T \bullet F_{(x,y)}$ .

In Formula 2, U is the score between the third pixel and the target object to be recognized, E is a vector, the vector includes the semantic feature corresponding to the textual description information of the target object to be recognized, $E^T$ is a transposed vector of the vector, $F_{(x,y)}$ is the third pixel, and $(x, y)$ is coordinates of the third pixel in the visual data.

In some embodiments, if the location feature of the target object to be recognized is further obtained, the vector E further includes the location feature of the target object to be recognized, that is, the vector E includes the semantic feature corresponding to the textual description information of the target object to be recognized and the location feature of the target object to be recognized.

In 7041, the score between the third pixel and each target object to be recognized is calculated according to Formula 2.

7042: The second device selects, from all target objects to be recognized, a target object whose score with the third pixel meets a specified condition, where the third pixel is a pixel in the selected target object.

In 7042, any target object whose score with the third pixel is greater than a score threshold is selected from all the objects to be recognized. Alternatively, all objects whose scores with the third pixel are greater than a score threshold are selected from all target objects to be recognized, and a target object whose score with the third pixel is the largest is selected from all the objects. The third pixel is used as a pixel of the selected target object.

All pixels that belong to the selected target object may be obtained from the visual data by repeating the foregoing operations 7041 to 7042, to recognize the selected target object in the visual data.

In some embodiments, when the target object is the second object, the semantic feature corresponding to the textual description information of the second object includes a semantic feature used to describe the second object and a semantic feature used to describe the at least one component of the second object. After the second object is recognized, the at least one component is further recognized from the second object based on the object recognition model and the semantic feature corresponding to the textual description information of the second object.

During implementation, a score between a fourth pixel and each component is obtained based on a visual feature vector of the fourth pixel and a semantic feature of each component according to Formula 2. The second object includes the fourth pixel, and the score between the fourth pixel and each component is used to reflect a probability that the fourth pixel belongs to the component. A component whose score with the fourth pixel meets a specified condition is selected from all components, where the fourth pixel is a pixel in the selected component. The foregoing process is repeated, and all pixels belonging to the selected component may be recognized from the second object, to recognize the at least one component from the second object.

In this way, hierarchical recognition is implemented, that is, a coarse-grained object is first recognized, and then a fine-grained component is recognized from the object. The component is recognized from the object. Compared with recognizing the component from the entire visual data, an amount of data to be processed can be reduced, and efficiency of recognition can be improved.

For any component of the second object, the component includes at least one sub-component, and the at least one sub-component may be recognized from the component in the foregoing manner. Details are not described herein again.

In some embodiments, textual description information that can be transformed based on the correspondence between the textual description information and the semantic feature includes textual description information of each object to be annotated. In this way, textual description information of each target object to be recognized can be more than the textual description information of each object to be annotated. For example, it is assumed that the textual description information of the target object to be recognized includes textual description information of a third object, and the textual description information of each object to be annotated does not include the textual description information of the third object. In other words, when the object recognition model is not trained to recognize the third object, the third object in the visual data may be recognized based on a semantic feature corresponding to the textual description information of the third object and the object recognition model.

In some embodiments, the to-be-processed visual data includes an annotated object. Optionally, the to-be-processed visual data may be the foregoing verification sample. Object recognition precision of the object recognition model is obtained based on the annotated object and the target object.

During implementation, an annotated object corresponding to each target object is determined. For any target object, if at least one component of the target object is recognized, precision of recognizing the target object is obtained based on the annotated object and the target object according to the following Formula 3.

$$\text{Formula 3 is: } HPQ(t_\ell) = \frac{\sum_{t_{\ell'} \in u_\ell} HPQ(t_{\ell'})}{|u_\ell|}.$$

In Formula 3, $t_\ell$ is the target object, $HPQ(t_\ell)$ is precision of recognizing the target object, $u_\ell$ is each recognized component in the target object, $|u_\ell|$ is a quantity of components included in the target object, $t_{\ell'}$ is a component in the target object, and $HPQ(t_{\ell'})$ is precision of recognizing the component.

The component corresponds to an annotated component in an annotated object. When a sub-component in the component is not recognized, an intersection set between the component and the annotated component is obtained, and a union set between the component and the annotated component is obtained, where $HPQ(t_{\ell'})$ is equal to a ratio of a quantity of pixels in the intersection set to a quantity of pixels in the union set, and $HPQ(t_{\ell'})$ is the precision of recognizing the component. When the sub-component in the component is recognized, the precision of recognizing the component is first calculated through iteration of the foregoing Formula 3, that is, in the foregoing Formula 3, $t_\ell$ is the component, $HPQ(t_\ell)$ is the precision of recognizing the component, $u_\ell$ is each sub-component recognized in the component, $|u_\ell|$ is a quantity of sub-components included in the component, $t_{\ell'}$ is a sub-component in the component, and $HPQ(t_{\ell'})$ is precision of recognizing the sub-component.

If at least one component of the target object is not recognized, an intersection set between the target object and an annotated object corresponding to the target object is obtained, and a union set between the target object and the annotated object corresponding to the target object is obtained, where the precision of recognizing the target object is equal to a ratio of a quantity of pixels in the intersection set to a quantity of pixels in the union set.

After the precision of recognizing each target object in the visual data is obtained, the object recognition precision of the object recognition model is first calculated through iteration of Formula 3 based on the precision of recognizing each target object. That is, in Formula 3, $t_\ell$ is the visual data, $HPQ(t_\ell)$ is the object recognition precision of the object recognition model in the visual data, $u_\ell$ is each target object recognized from the visual data, $|u_\ell|$ is a quantity of recognized target objects, $t_{\ell'}$ is a recognized target object, $HPQ(t_{\ell'})$ is the precision of recognizing the target object.

In some embodiments, when the object recognition precision of the object recognition model is less than a specified precision threshold, the object recognition model may be further trained based on at least one training sample.

In this embodiment of this application, the indication information of the at least one target object to be recognized is obtained, and the second semantic information is obtained based on the indication information. The second semantic information is semantics used to describe the at least one target object to be recognized. In this way, the target object is recognized from the visual data based on the second semantic information and the object recognition model, implementing on-demand object recognition, and improving flexibility of object recognition. The indication information indicates the first object and at least one component of the first object. In this way, the first object in the visual data is recognized based on the first semantic information and the object recognition model, and the at least one component is recognized from the first object. In this way, objects can be recognized hierarchically, and flexibility of recognition can be improved. The first object is first recognized, and at least one component is recognized from the first object. Compared with recognizing the at least one component from the entire visual data, an amount of data to be processed can be reduced, occupation of computing resources can be reduced, and efficiency of recognizing the at least one component can be improved.

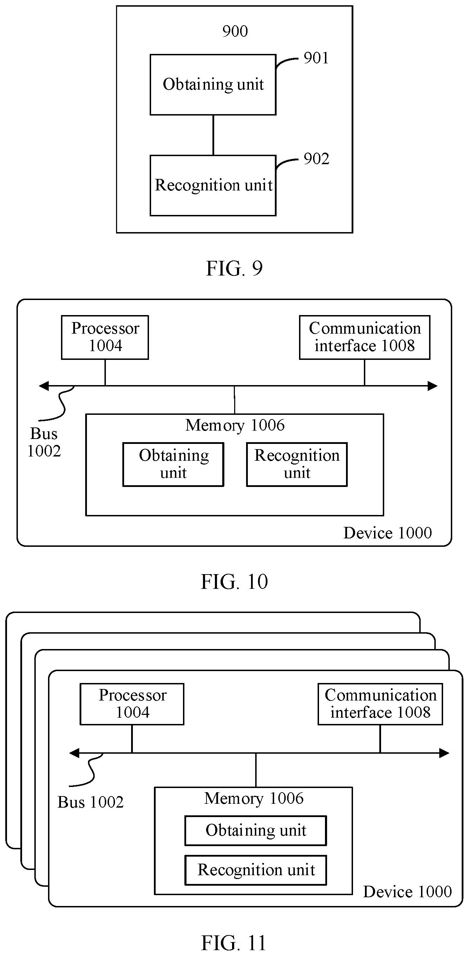

Refer to FIG. 9. An embodiment of this application provides an object recognition apparatus 900. The apparatus 900 is deployed on the second device in the network architecture 100 shown in FIG. 1 or the second device in the method 700 shown in FIG. 7, and includes:

an obtaining unit 901, configured to obtain to-be-processed visual data and indication information of at least one target object to be recognized, where the obtaining unit 901 is further configured to obtain semantic information based on the indication information of the at least one target object, and the semantic information is semantics used to describe the at least one target object; and
a recognition unit 902, configured to recognize the target object in the visual data based on an object recognition model and the semantic information.

Optionally, for a detailed implementation process in which the obtaining unit 901 obtains the visual data and the indication information, refer to related content in step 701 of the method 700 shown in FIG. 7. Details are not described herein again.

Optionally, for a detailed implementation process in which the obtaining unit 901 obtains the semantic information, refer to related content in step 702 of the method 700 shown in FIG. 7. Details are not described herein again.

Optionally, for a detailed implementation process in which the recognition unit 902 recognizes the target object, refer to related content in steps 703 and 704 of the method 700 shown in FIG. 7. Details are not described herein again.

Optionally, the indication information of the at least one target object includes textual description information of the at least one target.

The obtaining unit 901 is configured to separately obtain, based on a correspondence between the textual description information of the at least one target object and a semantic feature, a semantic feature corresponding to textual description information of each target object, where the semantic information includes the semantic feature corresponding to the textual description information of each target object.

Optionally, for a detailed implementation process in which the obtaining unit 901 obtains the semantic feature corresponding to the textual description information of each target object, refer to related content in step 702 of the method 700 shown in FIG. 7. Details are not described herein again.

Optionally, the recognition unit 902 is configured to:

obtain at least one visual feature vector based on the object recognition model and the visual data, where the at least one visual feature vector indicates semantic encoding of the visual data; and
recognize the target object in the visual data based on the at least one visual feature vector and the semantic information.

Optionally, for a detailed implementation process in which the recognition unit 902 obtains the at least one visual feature vector, refer to related content in step 703 of the method 700 shown in FIG. 7. Details are not described herein again.

Optionally, for a detailed implementation process in which the recognition unit 902 recognizes the target object in the visual data, refer to related content in step 704 of the method 700 shown in FIG. 7. Details are not described herein again.

Optionally, the indication information of the at least one target object includes indication information of a first object, and the indication information of the first object indicates the first object and at least one component of the first object.

The recognition unit 902 is configured to:

recognize the first object in the visual data based on the object recognition model and the semantic information; and
recognize the at least one component from the first object based on the object recognition model and the semantic information.

Optionally, for a detailed implementation process in which the recognition unit 902 recognizes the first object and the at least one component of the first object, refer to related content in 7041 to 7042 of the method 700 shown in FIG. 7. Details are not described herein again.

Optionally, the indication information of the at least one target object further includes location information that indicates a location range of the target object in the visual data.

The obtaining unit 901 is further configured to obtain a location feature of the target object based on the location information, where the location feature indicates a spatial orientation of the target object.

The recognition unit 902 is configured to recognize the target object in the visual data based on the object recognition model, the semantic information, and the location feature.

Optionally, for a detailed implementation process in which the recognition unit 902 recognizes the target object in the visual data, refer to related content in steps 7041 to 7042 of the method 700 shown in FIG. 7. Details are not described herein again.

Optionally, the visual data includes an image or a video, and the at least one visual feature vector includes a visual feature vector of each pixel in the visual data.

The recognition unit 902 is configured to:

separately obtain, based on a visual feature vector of a first pixel and the semantic information, a score between the first pixel and each target object to be recognized, where the visual data includes the first pixel, and the score between the first pixel and the target object to be recognized is used to reflect a probability that the first pixel belongs to the target object to be recognized; and
select, from all target objects to be recognized, a target object whose score with the first pixel meets a specified condition, where the first pixel is a pixel in the selected target object.

Optionally, for a detailed implementation process in which the recognition unit 902 obtains the score, refer to related content in 7041 of the method 700 shown in FIG. 7. Details are not described herein again.

Optionally, for a detailed implementation process in which the recognition unit 902 selects the target object, refer to related content in 7042 of the method 700 shown in FIG. 7. Details are not described herein again.

Optionally, the object recognition model is obtained through model training based on at least one training sample and semantic information corresponding to indication information of at least one object to be annotated, the training sample includes the at least one object indicated by the indication information, and a part or all of the at least one object is annotated.

Optionally, the annotated object includes a second object, image definition of the second object exceeds a definition threshold, and a component of the second object is annotated.

Optionally, the visual data includes an annotated object, and the obtaining unit 901 is further configured to obtain, based on the annotated object and the target object, object recognition precision of the object recognition model.

Optionally, for a detailed implementation process in which the obtaining unit 901 obtains the precision, refer to related content in step 704 of the method 700 shown in FIG. 7. Details are not described herein again.

In this embodiment of this application, the obtaining unit obtains the indication information of the at least one target object to be recognized, and obtains the second semantic information based on the indication information. The second semantic information is semantics used to describe the at least one target object to be recognized. In this way, the recognition unit recognizes the target object from the visual data based on the second semantic information and the object recognition model, implementing on-demand object recognition, and improving flexibility of object recognition. The indication information indicates the first object and at least one component of the first object. In this way, the first object in the visual data is recognized based on the first semantic information and the object recognition model, and the at least one component is recognized from the first object. In this way, objects can be recognized hierarchically, and flexibility of recognition can be improved.

Refer to FIG. 10. An embodiment of this application provides an object recognition device 1000. As shown in FIG. 10, the device 1000 includes a bus 1002, a processor 1004, a memory 1006, and a communication interface 1008. The processor 1004, the memory 1006, and the communication interface 1008 communicate with each other through the bus 1002. The device 1000 may be a server or a terminal device. It should be understood that a quantity of processors and a quantity of memories in the device 1000 are not limited in this application.

The bus 1002 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 10. However, it does not indicate that there is only one bus or only one type of bus. The bus 1002 may include a path for information transfer between various components (for example, the memory 1006, the processor 1004, and the communication interface 1008) of the device 1000.

The processor 1004 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The processor 1004 may further include a non-volatile memory (non-volatile memory), for example, a read-only memory (read-only memory, ROM), a flash memory, a hard disk drive (hard disk drive, HDD), or a solid-state drive (solid state drive, SSD).

Refer to FIG. 10. The memory 1006 stores executable program code, and the processor 1004 executes the executable program code to separately implement functions of the obtaining unit 901 and the recognition unit 902 in the apparatus 900 shown in FIG. 9, to implement an object recognition method. In other words, the memory 1006 stores instructions for performing the object recognition method.

The communication interface 1008 uses a transceiver module, for example, but not limited to, a network interface card or a transceiver, to implement communication between the device 1000 and another device or a communication network.

An embodiment of this application further provides an object recognition cluster. The object recognition cluster includes at least one device 1000. The device 1000 may be a server, for example, a central server, an edge server, or a local server in a local data center. In some embodiments, the device may alternatively be a terminal device, for example, a desktop computer, a notebook computer, or a smartphone.

As shown in FIG. 11, the object recognition cluster includes at least one device 1000. A memory 1006 in one or more devices 1000 in the object recognition cluster may store same instructions for performing the method provided in any one of the foregoing embodiments.

In some possible implementations, a memory 1006 in one or more devices 1000 in the object recognition cluster may alternatively separately store some instructions for performing the foregoing object recognition method. In other words, a combination of one or more devices 1000 may jointly execute instructions for performing the method provided in any of the foregoing embodiments.

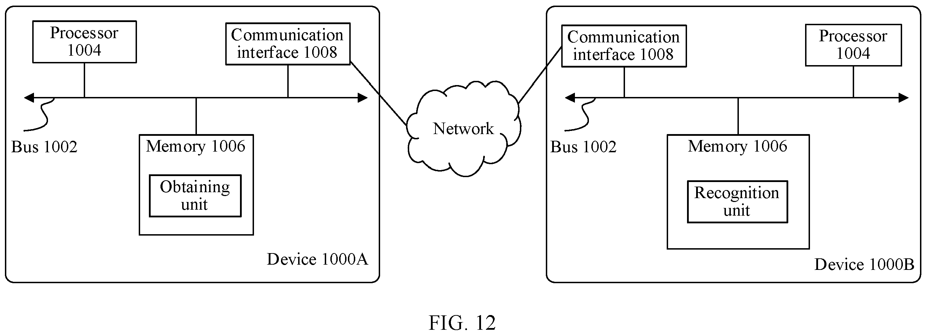

In some possible implementations, the one or more devices in the object recognition cluster may be connected through a network. The network may be a wide area network, a local area network, or the like. FIG. 12 shows a possible implementation. As shown in FIG. 12, two devices 1000A and 1000B are connected through a network. Specifically, each device 1000 is connected to the network over a communication interface of the device 1000.

In such possible implementation, a memory 1006 in the device 1000A stores instructions for executing a function of the obtaining unit 901 in the embodiment shown in FIG. 9. In addition, a memory 1006 in the device 1000B stores instructions for executing a function of the recognition unit 902 in the embodiment shown in FIG. 9.

It should be understood that functions of the device 1000A shown in FIG. 12 may also be implemented by multiple devices 1000. Similarly, functions of the device 1000B may also be implemented by multiple devices 1000.

An embodiment of this application further provides another object recognition cluster. A connection relationship between devices in the object recognition cluster may be similar to a connection manner of the object recognition cluster in FIG. 12. A difference is that a memory 1006 in one or more devices 1000 in the object recognition cluster may store same instructions for performing the method provided in any one of the foregoing embodiments.

In some possible implementations, a memory 1006 in one or more devices 1000 in the object recognition cluster may alternatively separately store some instructions for performing the method provided in any one of the foregoing embodiments. In other words, a combination of one or more devices 1000 may jointly execute instructions for performing the method provided in any of the foregoing embodiments.

A person of ordinary skill in the art may understand that a part or all of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, or improvement made without departing from the principle of this application shall fall within the protection scope of this application.

## Claims

1. An object recognition method, wherein the method comprises:

   obtaining to-be-processed visual data and indication information of at least one target object to be recognized;
   obtaining semantic information based on the indication information of the at least one target object, wherein the semantic information is semantics used to describe the at least one target object; and
   recognizing the target object in the visual data based on an object recognition model and the semantic information.

2. The method according to claim 1, wherein the indication information of the at least one target object comprises textual description information of the at least one target object; and
   the obtaining semantic information based on the indication information of the at least one target object comprises:
   separately obtaining, based on a correspondence between the textual description information of the at least one target object and a semantic feature, a semantic feature corresponding to textual description information of each target object, wherein the semantic information comprises the semantic feature corresponding to the textual description information of each target object.

3. The method according to claim 1 or 2, wherein the recognizing the target object in the visual data based on an object recognition model and the semantic information comprises:

   obtaining at least one visual feature vector based on the object recognition model and the visual data, wherein the at least one visual feature vector indicates semantic encoding of the visual data; and
   recognizing the target object in the visual data based on the at least one visual feature vector and the semantic information.

4. The method according to any one of claims 1 to 3, wherein the indication information of the at least one target object comprises indication information of a first object, and the indication information of the first object indicates the first object and at least one component of the first object; and
the recognizing the target object in the visual data based on an object recognition model and the semantic information comprises:

recognizing the first object in the visual data based on the object recognition model and the semantic information; and
recognizing the at least one component from the first object based on the object recognition model and the semantic information.

5. The method according to any one of claims 1 to 3, wherein the indication information of the at least one target object further comprises location information that indicates a location range of the target object in the visual data, and the method further comprises:

obtaining a location feature of the target object based on the location information, wherein the location feature indicates a spatial orientation of the target object; and
the recognizing the target object in the visual data based on an object recognition model and the semantic information comprises:
recognizing the target object in the visual data based on the object recognition model, the semantic information, and the location feature.

6. The method according to claim 3, wherein the visual data comprises an image or a video, and the at least one visual feature vector comprises a visual feature vector of each pixel in the visual data; and
the recognizing the target object in the visual data based on the at least one visual feature vector and the semantic information comprises:

separately obtaining, based on a visual feature vector of a first pixel and the semantic information, a score between the first pixel and each target object to be recognized, wherein the visual data comprises the first pixel, and the score between the first pixel and the target object to be recognized is used to reflect a probability that the first pixel belongs to the target object to be recognized; and
selecting, from all target objects to be recognized, a target object whose score with the first pixel meets a specified condition, wherein the first pixel is a pixel in the selected target object.

7. The method according to any one of claims 1 to 6, wherein
the object recognition model is obtained through model training based on at least one training sample and semantic information corresponding to indication information of at least one object to be annotated, the training sample comprises the at least one object indicated by the indication information, and a part or all of the at least one object is annotated.

8. The method according to claim 7, wherein the annotated object comprises a second object, image definition of the second object exceeds a definition threshold, and a component of the second object is annotated.

9. The method according to any one of claims 1 to 8, wherein the visual data comprises an annotated object, and the method further comprises:
obtaining, based on the annotated object and the target object, object recognition precision of the object recognition model.

10. An object recognition apparatus, wherein the apparatus comprises:

an obtaining unit, configured to obtain to-be-processed visual data and indication information of at least one target object to be recognized, wherein
the obtaining unit is further configured to obtain semantic information based on the indication information of the at least one target object, and the semantic information is semantics used to describe the at least one target object; and
a recognition unit, configured to recognize the target object in the visual data based on an object recognition model and the semantic information.

11. The apparatus according to claim 10, wherein the indication information of the at least one target object comprises textual description information of the at least one target object; and
the obtaining unit is configured to separately obtain, based on a correspondence between the textual description information of the at least one target object and a semantic feature, a semantic feature corresponding to textual description information of each target object, wherein the semantic information comprises the semantic feature corresponding to the textual description information of each target object.

12. The apparatus according to claim 10 or 11, wherein the recognition unit is configured to:

obtain at least one visual feature vector based on the object recognition model and the visual data, wherein the at least one visual feature vector indicates semantic encoding of the visual data; and

recognize the target object in the visual data based on the at least one visual feature vector and the semantic information.

13. The apparatus according to any one of claims 10 to 12, wherein the indication information of the at least one target object comprises indication information of a first object, and the indication information of the first object indicates the first object and at least one component of the first object; and

the recognition unit is configured to:

recognize the first object in the visual data based on the object recognition model and the semantic information; and

recognize the at least one component from the first object based on the object recognition model and the semantic information.

14. The apparatus according to any one of claims 10 to 12, wherein the indication information of the at least one target object further comprises location information that indicates a location range of the target object in the visual data, and

the obtaining unit is further configured to obtain a location feature of the target object based on the location information, wherein the location feature indicates a spatial orientation of the target object; and

the recognition unit is configured to recognize the target object in the visual data based on the object recognition model, the semantic information, and the location feature.

15. The apparatus according to claim 12, wherein the visual data comprises an image or a video, and the at least one visual feature vector comprises a visual feature vector of each pixel in the visual data; and

the recognition unit is configured to:

separately obtain, based on a visual feature vector of a first pixel and the semantic information, a score between the first pixel and each target object to be recognized, wherein the visual data comprises the first pixel, and the score between the first pixel and the target object to be recognized is used to reflect a probability that the first pixel belongs to the target object to be recognized; and

select, from all target objects to be recognized, a target object whose score with the first pixel meets a specified condition, wherein the first pixel is a pixel in the selected target object.

16. The apparatus according to any one of claims 10 to 15, wherein

the object recognition model is obtained through model training based on at least one training sample and semantic information corresponding to indication information of at least one object to be annotated, the training sample comprises the at least one object indicated by the indication information, and a part or all of the at least one object is annotated.

17. The apparatus according to claim 16, wherein the annotated object comprises a second object, image definition of the second object exceeds a definition threshold, and a component of the second object is annotated.

18. The apparatus according to any one of claims 10 to 17, wherein the visual data comprises an annotated object, and the obtaining unit is further configured to obtain, based on the annotated object and the target object, object recognition precision of the object recognition model.

19. A device, comprising a processor and a memory, wherein

the processor is configured to execute instructions stored in the memory, causing the device to perform the method according to any one of claims 1 to 9.

20. A computer-readable storage medium, wherein the computer readable storage medium stores a computer program, and when the computer program is executed by a device, the device performs the method according to any one of claims 1 to 9.

FIG. 1

FIG. 2

Building

Road

FIG. 3

Building

Road

FIG. 4

FIG. 5

600

A first device obtains at least one training sample and indication information of at least one object to be annotated, where the training sample includes the at least one object indicated by the indication information, and a part or all of the at least one object is annotated

— 601

The first device obtains first semantic information based on the indication information of the at least one object to be annotated, where the first semantic information is semantics used to describe the at least one object to be annotated

— 602

The first device recognizes an object in each training sample based on the at least one training sample, the first semantic information, and an object recognition model to be trained

— 603

The first device calculates a loss value based on an annotated object in each training sample and the recognized object in each training sample by using a loss function, and adjusts, based on the loss value, a parameter of the object recognition model to be trained

— 604

The first device determines whether to continue training the object recognition model to be trained, and if the first device determines to continue training the object recognition model to be trained, return to step 603, or if the first device determines not to continue training the object recognition model to be trained, the object recognition model to be trained is used as an object recognition model

— 605

FIG. 6

700

| A second device obtains to-be-processed visual data and indication information of at least one target object to be recognized | 701 |

↓

| The second device obtains second semantic information based on the indication information of the at least one target object to be recognized, where the second semantic information is semantics used to describe the at least one target object to be recognized | 702 |

↓

| The second device obtains at least one visual feature vector based on an object recognition model and the visual data, where the at least one visual feature vector indicates semantic encoding of the visual data | 703 |

↓

| The second device recognizes the target object in the visual data based on the at least one visual feature vector and the second semantic information | 704 |

FIG. 7

Building

Road

FIG. 8

900

901

Obtaining unit

902

Recognition unit

FIG. 9

Processor
1004

Communication
interface 1008

Bus
1002

Memory 1006

Obtaining
unit

Recognition
unit

Device 1000

FIG. 10

Processor
1004

Communication
interface 1008

Bus 1002

Memory 1006

Obtaining unit

Recognition unit

Device 1000

FIG. 11

FIG. 12

EP 4 528 679 A1

## INTERNATIONAL SEARCH REPORT

| International application No. |
| --- |
| **PCT/CN2023/100703** |

**A. CLASSIFICATION OF SUBJECT MATTER**

G06V 20/70(2022.01)i

According to International Patent Classification (IPC) or to both national classification and IPC

**B. FIELDS SEARCHED**

Minimum documentation searched (classification system followed by classification symbols)

IPC:G06V, G06K, G10L, H04L

Documentation searched other than minimum documentation to the extent that such documents are included in the fields searched

Electronic data base consulted during the international search (name of data base and, where practicable, search terms used)

CNTXT, USTXT, WOTXT, EPTXT, VCN, VEN, CNKI, IEEE, BING: 按需, 对象识别, 轮廓, 描述信息, 模型, 视觉, 特征, 图像, 文本, 像素, 语义, 指示, 概率, on demand, object, recognition, contour?, descript+, model, visual+, feature+, image, text, pixel?, semantic+, indicat+, probability

**C. DOCUMENTS CONSIDERED TO BE RELEVANT**

| Category* | Citation of document, with indication, where appropriate, of the relevant passages | Relevant to claim No. |
| --- | --- | --- |
| X | CN 114401417 A (GUANGZHOU CUBESILI INFORMATION TECHNOLOGY CO., LTD.) 26 April 2022 (2022-04-26) description, paragraphs [0080]-[0084], figures 1-11, and claims 5 and 9-10 | 1-5, 7-14, 16-20 |
| A | CN 114299321 A (TENCENT TECHNOLOGY (SHENZHEN) CO., LTD.) 08 April 2022 (2022-04-08) entire document | 1-20 |
| A | CN 114429552 A (BEIJING YOUZHUJU NETWORK TECHNOLOGY CO., LTD.) 03 May 2022 (2022-05-03) entire document | 1-20 |
| A | CN 114581710 A (TENCENT TECHNOLOGY (SHENZHEN) CO., LTD.) 03 June 2022 (2022-06-03) entire document | 1-20 |
| A | WO 2019055114 A1 (HRL LABORATORIES, L.L.C.) 21 March 2019 (2019-03-21) entire document | 1-20 |

☐ Further documents are listed in the continuation of Box C. ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **13 September 2023** | **20 September 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/100703**

| Patent document cited in search report | | | Publication date (day/month/year) | Patent family member(s) | | | Publication date (day/month/year) |
|---|---|---|---|---|---|---|---|
| CN | 114401417 | A | 26 April 2022 | None | | | |
| CN | 114299321 | A | 08 April 2022 | None | | | |
| CN | 114429552 | A | 03 May 2022 | None | | | |
| CN | 114581710 | A | 03 June 2022 | None | | | |
| WO | 2019055114 | A1 | 21 March 2019 | EP | 3682370 | A1 | 22 July 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210727401

- CN 202210851482